(19) **Europäisches Patentamt**
**European Patent Office**
**Office européen des brevets**

(11) **EP 2 312 719 B1**

(12) **EUROPEAN PATENT SPECIFICATION**

(45) Date of publication and mention
of the grant of the patent:
**01.08.2012 Bulletin 2012/31**

(51) Int Cl.:
*H02J 3/24* *(2006.01)*      *H02J 13/00* *(2006.01)*

(21) Application number: **09173236.2**

(22) Date of filing: **16.10.2009**

(54) **Investigating timing reliability in relation to control of a power transmission system**

Untersuchung der zeitlichen Zuverlässigkeit in Zusammenhang mit einer Steuerung eines
Energieübertragungssystems

Analyse de fiabilité temporelle en relation avec une commande d'un système de transmission d'énergie

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**20.04.2011 Bulletin 2011/16**

(73) Proprietor: **ABB Research Ltd.**
**8050 Zürich (CH)**

(72) Inventors:
• **Berggren, Bertil**
**SE-72476 Västeras (SE)**

• **Majumder, Rajat**
**Raleigh, North Carolina, 27606 (US)**

(74) Representative: **ABB Patent Attorneys**
**C/o ABB Schweiz AG**
**Intellectual Property (CH-LC/IP)**
**Brown Boveri Strasse 6**
**5400 Baden (CH)**

(56) References cited:
**US-A1- 2009 099 798     US-B1- 6 687 255**

**Description**

FIELD OF THE INVENTION

The invention relates to the field of wide area control of an electric power transmission system. The invention more particularly concerns a method, power control device and computer program product for evaluating the accuracy of timing in a power transmission system.

BACKGROUND OF THE INVENTION

In the wake of the ongoing deregulations of the electric power markets, load transmission and wheeling of power from distant generators to local consumers has become common practice. As a consequence of the competition between power producing companies and the emerging need to optimize assets, increased amounts of electric power are transmitted through the existing networks, frequently causing congestions due to transmission bottlenecks. Transmission bottlenecks are typically handled by introducing transfer limits on transmission interfaces. This improves system security.

However it also implies that more costly power production has to be connected while less costly production is disconnected from a power grid. Thus, transmission bottlenecks have a substantial cost to the society. If transfer limits are not respected, system security is degraded which may imply disconnection of a large number of customers or even complete blackouts in the event of credible contingencies.

The underlying physical cause of transmission bottlenecks is often related to the dynamics of the power system. A number of dynamic phenomena need to be avoided in order to certify sufficiently secure system operation, such as loss of synchronism, voltage collapse and growing electromechanical oscillations. In this regard, electrical power transmission systems are highly dynamic and require control and feedback to improve performance and increase transfer limits.

For instance in relation to unwanted electromechanical oscillations that occur in parts of the power network, these oscillations generally have a frequency of less than a few Hz and are considered acceptable as long as they decay fast enough. They are initiated by e.g. normal changes in the system load or switching events in the network possibly following faults, and they are a characteristic of any power system. The above mentioned oscillations are also often called Inter-area modes of oscillation since they are typically caused by a group of machines in one geographical area of the system swinging against a group of machines in another geographical area of the system. Insufficiently damped oscillations may occur when the operating point of the power system is changed, for example due to a new distribution of power flows following a connection or disconnection of generators, loads and/or transmission lines.

In these cases, an increase in the transmitted power of a few MW may make the difference between stable oscillations and unstable oscillations which have the potential to cause a system collapse or result in loss of synchronism, loss of interconnections and ultimately the inability to supply electric power to the customer. Appropriate monitoring and control of the power transmission system can help a network operator to accurately assess power transmission system states and avoid a total blackout by taking appropriate actions such as the connection of specially designed oscillation damping equipment.

There is thus a need for damping such interarea mode oscillations. This type of power oscillation damping is for instance described in "Application of FACTS Devices for Damping of Power System Oscillations", by R. Sadikovic et al., proceedings of the Power Tech conference 2005, June 27-30, St. Petersburg RU,

US Patent application 2009/099798 (Gong et al.) discloses a power system oscillation detection device in which a plurality of sample signals are acquired from the electrical power system via a plurality of intelligent electronic devices (IEDs) in communication with the power system. The power system oscillation detection device includes a real-time modal analysis module, a real-time mode identification module, and real-time decision and control logic. The real-time modal analysis module calculates modes of at least one of the signals, each mode including mode information. The real-time mode identification module together with the real-time decision and control logic determines, from the mode information, whether there is an undesirable oscillation in the electric power system and activates a remedial action.

Damping may be based on local measurements of system properties, i.e. on system properties measured close to the location where the required damping is determined and also performed or be based on measurements in various areas of the system. The first type of damping is often denoted local power oscillation damping, while the latter case is normally termed wide area power oscillation damping.

The latter type of damping is in many ways preferred, since it considers the system performance globally and not locally. However, since the measurements are collected from various areas of such a system, they may travel a long way before they reach the power control device where the wide area power oscillation damping is performed. This means that the timing used is important.

A good timing is important, because otherwise there is a risk that the power transmission system may fail. Even though the probability of a failure of a power transmission system due to the timing being unreliable is often very low, it may still be of interest to lower this probability even further, because the consequences of a failed power transmission system can be severe.

A reliable timing may also be important also in other types of wide area control than power oscillation damping

The present invention is directed towards improving the reliability when controlling a power transmission system.

SUMMARY OF THE INVENTION

It is therefore an objective of the invention to improve the reliability when controlling a power transmission system. These objectives are achieved by a method and a power control device according to claims 1 and 11 and a computer program product according to claim 20. Further preferred embodiments are evident from the dependent claims.

According to a first aspect of the invention, a method is provided for evaluating the accuracy of timing provided by time generating equipment in relation to wide area control in a power transmission system, where the wide area control is performed in the power transmission system based on time stamped measurements of system data, the time stamped measurements comprising time stamps (TS), the method comprising the steps of:

investigating the timing used in relation to the measurements,
determining if the timing is reliable or not based on the investigation, and
aborting wide area control if the timing is deemed unreliable.

According to a second aspect of the present invention a power control device for evaluating the accuracy of timing provided by time generating equipment in relation to wide area control in a power transmission system is provided. The wide area control is performed in the power transmission system based on time stamped measurements of system data. The power control device comprises a timing deviation handling unit configured to investigate the timing used in relation to measurements, determine if the timing is reliable or not based on the investigation and abort wide area control if the timing is deemed unreliable.

According to a third aspect of the present invention there is provided a computer program for evaluating the accuracy of timing provided by time generating equipment in relation to wide area control in a power transmission system is provided, where the wide area control is performed in the power transmission system based on time stamped measurements of system data. The computer program is loadable into an internal memory of a power control device and comprises computer program code means to make the power control device, when the program is loaded in the internal memory, investigate the timing used in relation to measurements, determine if the timing is reliable or not based on the investigation and abort wide area control if the timing is deemed unreliable.

The invention according to these aspects has the advantage of aborting wide area control based on the reliability of the timing used, which provides increased reliability in the power transmission system, especially in relation to the timing used by time generating equipment of the system. This is especially important in closed loop control systems.

In one variation of the invention the investigating of the timing may comprise investigating the time stamps of the measurements. The determining if the timing is reliable or not may then comprise determining if one or more of the time stamps are reliable or not and the aborting of wide area control may comprise aborting wide area control if one or more of the time stamps is deemed unreliable.

In another variation of the invention the investigating of the time stamps comprises determining at least one time delay between the time stamps of measurements intended for use in wide area control and the time at which these measurements are received by a measurement collecting device of the system, comparing the time delay with a time delay range having an upper and a lower limit and performing the aborting of wide area control if the determined time delay is outside of this range. The upper limit of the range may be defined by the time within which wide area control is possible. The lower limit of the range may be set in relation to the fastest time a measurement value can reach said power control units. The lower limit may with advantage be zero.

The power control system may comprise a measurement aligning unit that aligns the measurements according to their time stamps. The determining of at least one time delay may here comprise determining a time delay for measurements after delivery by the measurement aligning unit, which time delay is compared with the upper limit of the range. The measurement aligning unit can here be a measurement collecting device and the determining of at least one time delay may also comprise determining a time delay for measurements being received by the measurement aligning unit, which time delay is compared with the lower limit of the range.

According to another variation of the invention, the time stamped measurements may be obtained from measurement value providing devices that are in contact with at least one reference clock device. The time stamps of the measurements may be accompanied by a setting indicating a lost contact with reference clock devices, the investigating may involve investigating if such a setting exists in the measurements and the aborting may involves aborting wide area control if this setting exists in at least one measurement. The timing may also involve comparing the time provided via the reference clock device with the time of a local clock and aborting wide area control in case the difference exceeds a reliability threshold. This reliability threshold may be set according to the accuracy of the local clock possibly with a safety margin.

According to another variation it is possible to investigate measurement values of measurements from at least two different measurement providing devices in relation to an applicability criterion and abort wide are control if the applicability criterion is not fulfilled.

The control may involve power oscillation damping that is switchable between local and wide area power oscillation damping and local power oscillation damping may be initiated when wide area power oscillation damping has been aborted.

BRIEF DESCRIPTION OF THE DRAWINGS

The subject matter of the invention will be explained in more detail in the following text with reference to preferred exemplary embodiments which are illustrated in the attached drawings, of which:

Fig. 1 schematically shows a number of measurement providing devices in a power transmission system being connected to a power oscillation damping arrangement, which forms a power control device according to a first embodiment of the invention,

Fig. 2 outlines the general structure of measurement data provided by the measurement providing devices,

Fig. 3 shows a block schematic of a timing deviation handling unit used in a power control device of the first embodiment of the invention,

Fig. 4 schematically shows a flow chart outlining a number of method steps being performed in a method according to the first embodiment of the invention,

Fig. 5A schematically shows measurements delivered to a measurement aligning unit in the case of a positive time delay fault,

Fig. 5B schematically shows measurements delivered to the measurement aligning unit in the case of a negative time delay fault,

Fig. 6A graphically illustrates a pole-shift in the complex frequency domain of a power oscillation damping unit,

Fig. 6B graphically illustrates the delayed measured signal and four possible solutions (A,

B, C and D) for the compensation of the time delay,

Fig. 7A - 7D show Nyquist diagrams of the four possible solutions,

Fig. 8A - 8D show Bode diagrams of the four possible solutions,

Fig. 9 schematically shows the power transmission system being connected to a power oscillation damping arrangement where a power control device according to a second embodiment of the invention is provided, and

Fig. 10 schematically shows a measurement aligning unit provided in relation to the power oscillation damping arrangement.

DETAILED DESCRIPTION OF PREFERRED EMBODIMENTS

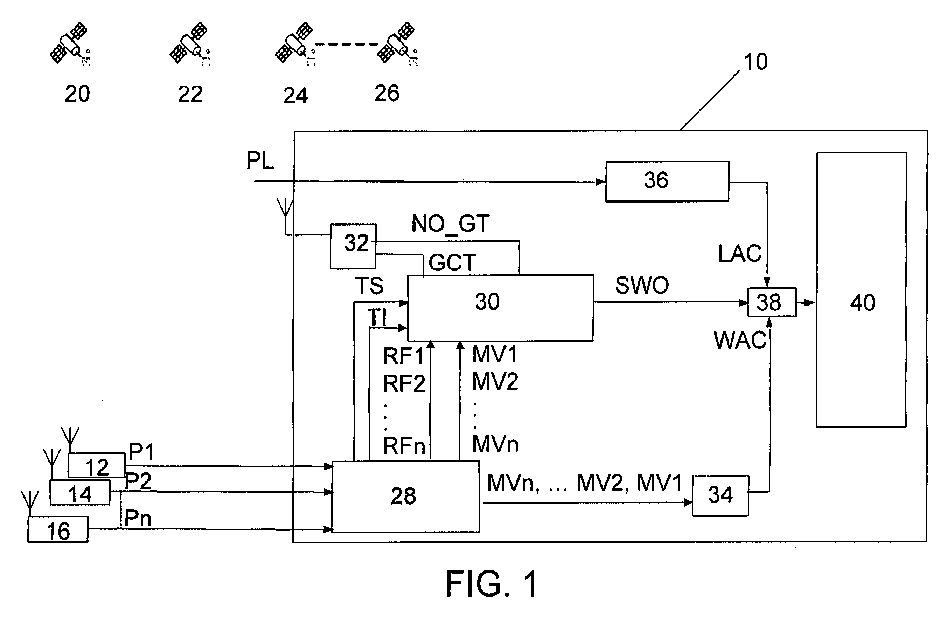

Fig. 1 schematically shows a power transmissions system in which a power oscillation damping arrangement 10 is provided. This arrangement 10 is a power control device according to a first embodiment of the invention. The power transmission system is preferably an AC power transmission system and then operating at a network frequency such as 50 or 60 Hz. Fig, 2 schematically outlines the general structure of measurement data provided by measurement providing devices.

The power transmission system may be provided in a number of geographical areas. These areas are typically provided on great distances from each other, where one may as an example be provided in the south of Finland and another in the south of Norway. A geographical area can be considered as a coherent area. A coherent area is an area where a group of electrical machines, such as synchronous generators, are moving coherently, i.e. they are oscillating together. Such an area may also be considered as an electrical area, because the machines are close to each other in an electrical sense. In these geographical areas there are high-voltage tie lines for connecting geographically separated regions, medium-voltage lines, substations for transforming voltages and switching connections between lines as well as various buses in the local areas. Measurement devices are furthermore connected to such power lines and buses. The measurement devices may here be connected to measurement providing devices 12, 14 and 16 that may be Phasor Measurement Units (PMU). A PMU provides time-stamped local data about the system, in particular currents and voltage phasors. A plurality of phasor measurements collected throughout the network by PMUs and processed centrally can therefore provide a snapshot of the overall electrical state of the power transmission system. Such PMUs are normally also equipped with GPS clocks that synchronize themselves with reference clock devices in the form of GPS satellites 20, 22, 24 and 26 and will send measurement values, often in the form of phasors, such as positive sequence phasors, at equidistant points in time, e.g. every 20 ms. These measurements P include measurement values MV of phasors that are time stamped TS, where a time stamp may represent the point in time when the phasor was measured in the system. In the format that these measurements are reported there is furthermore a reliability field RF, which indicates if the time stamp TS is reliable or not and more particularly indicates if the measurement providing device is in contact with a satellite or not. This means that if it is not in contact with a satellite, the field indicates that the time stamp is unreliable, while if the measurement providing device is in contact, the field indicates that the time stamp is reliable. The setting of this field thus indicates a lost contact with a reference clock device.

In fig. 1 there are generally n such measurement providing devices 12, 14 and 16 each providing phasors P1, P2 and Pn. These measurement providing devices are in this example all PMUs that provide phasors, time stamps the phasors and sends these in order for these phasors to be processed by the power control device. It should here be realized that there may be many more different measurement providing devices in the system in different geographical areas, where a geographical area normally corresponds to a separate group of machines swinging against a group of machines of another geographical area.

In fig. 1 a first measurement providing device 12 is shown as sending a first measurement or phasor P1, typically a voltage or current phasor, a second measurement providing device 14 is shown as sending a second phasor P2 and an nth measurement providing device 16 is shown as sending an nth phasor Pn. All these phasors P1, P2, Pn are measured on-line and provided for the power control device. The phasors P are thus obtained at distant geographical locations and time stamped TS by the measurement providing devices 12, 14 and 16, normally using a GPS clock, and sent via communication channels, which are potentially several thousand kilometers in length, to a measurement aligning unit 28.

The measurement aligning unit 28 may be a Phasor Data Concentrator (PDC) and receives the above-described measurements and synchronizes them, i.e. packages the phasors with the same time stamp. The measurement aligning unit 28 is a measurement collecting unit, i.e. a unit that collects measurements, for instance from various geographical areas of the power transmission system. In this first embodiment of the present invention this measurement aligning unit 28 is a part of the power oscillation damping arrangement 10. It may in some embodiments of the invention thus be a part of the power control device.

A measurement aligning unit 28 is to listen to measurement providing devices that are sending time stamped phasors on a regular basis (e.g. every 20 ms). The measurement aligning unit 28 aligns the phasors according to the time stamp, expecting one measurement or phasor from each measurement providing device per time slot, and forwards all measurements when these corresponding to a given time slot are available.

The measurement aligning unit 28 provides the time aligned measurements or phasors to the wide area control unit, which is here a power oscillation damping unit 34. In doing this it also provides data in relation to the measurements to a timing deviation handling unit 30. The measurement aligning unit 28 here provides time stamps TS, measurement values MV1, MV2 and MVn and reliability field settings RF1, RF2, RFn of the measurements P1, P2, Pn being delivered as well as timing indicators TI indicating the time of the measurements that it has received most recently to the timing deviation handling unit 30. There is also a GPS clock 32, which provides a global current time GCT. This global current time GCT is provided to the timing deviation handling unit 30 together with an indication or signal NO_CT. The signal NO_CT is a signal indicating if there is a contact between the GPS clock 32 and the reference clock devices 20, 22, 24 and 26 or not. The measurements or phasors are also delivered MV1, MV2, MVn to the wide area power oscillation damping unit 34.

The power control device 10 may be realized in the form of a general power control system provided for an actuator, which may be a synchronous generator or a FACTS or HVDC installation. The power control device here includes an actuator control unit 40 which provides an actuator control signal for the actuator. In this regard a modulation signal is generated in the power control device, which modulation signal is added to an actuator control signal generated by the actuator control unit 40 in order to counteract power oscillations. This modulation signal is here simply termed control signal.

The wide area power oscillations damping unit 34 may thus generate a control signal applied to an actuator control unit 40 for performing wide area control such as damping of inter-area power oscillations. How such damping may be performed is as such known in the art and will not be described in more detail here. In the power control device of the first embodiment the timing deviation handling unit 30 is furthermore connected to a switchover unit 38, which switchover unit 38 is also connected to a local control unit, here in the form of a local power oscillation damping unit 36, as well as to the actuator control unit 40. The local power oscillation damping unit 36 is here provided in parallel with the wide area power oscillation damping unit 34. The wide area power oscillation damping unit 34 provides one feedback loop, while the local power oscillations damping unit 36 provides another feedback loop, where both loops are here provided for closed-loop power oscillation damping (POD), which is the same as damping of electromechanical oscillations. The local feedback loop on the top corresponds to a standard configuration, where the input signal PL is a locally measured quantity e.g. power flow on a local transmission line or locally derived frequency. This local power oscillation damping unit 36 thus receives local measurements PL and provides a modulation signal determined based on these local measurements PL, which modulation signal can be added to the control signal generated by the actuator control unit 40. Both the wide area power oscillation damping unit 34 and the local power oscillation damping unit 36 are therefore connected to the switchover unit 38, which passes on signals from either of these two units 34 and 36 to the actuator control unit 40 for performing power oscillation damping. According to the present invention at least some of this control of the switchover unit is provided through the timing deviation handling unit 30 through the use of a switchover signal SWO.

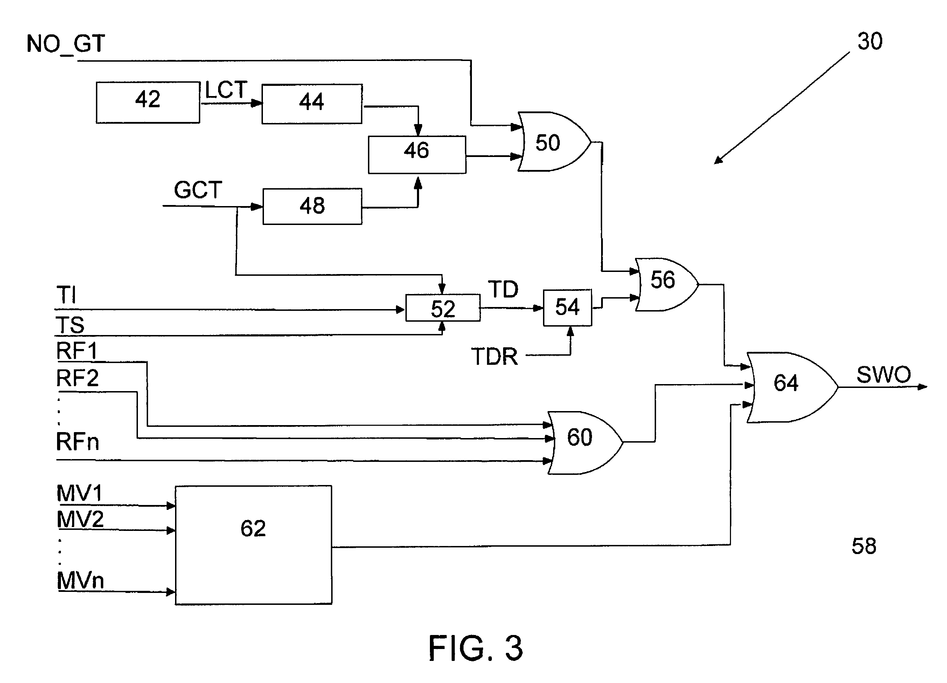

Fig. 3 schematically outlines one realization of the timing deviation handling unit 30. In this unit the time stamps TS and the timing indicators TI are received by a time delay determining element 52. The time delay determining element 52 also receives a current global time GCT from the GPS clock of the power control device. The reliability field settings RF1, RF2, RFn are received by a first combining element 60, while the measurement values MV1, MV2, MVn of the measurements P1, P2, Pn are received by a measurement value comparing element 62. In the timing deviation handling unit 30 there is furthermore a local clock 42, which provides a local current time LCT to a counter 44, which counter in turn supplies a count to a timing comparing element 46. There is also a time capturing element 48, which receives the global current time GCT from the GPS clock of the power control device. The timing comparing element 46 is in turn connected to a second combining element 50, which second combing element 50 receives the signal NO_GT from the GPS clock. Based on these inputs the second combining element 50 generates a signal that is supplied to a third combining element 56. The delay determining element 52 determines at least one time delay TD based on the time stamps TS, timing indicator TI and the global current time GCT and provides this time delay TD to a comparing element 54, which comparing element 54 also receives a time delay range TDR, with which determined time delays TD are to be compared. Based on this comparison the comparing element 54 provides a signal to the third combining element 56. The third combining element provides a signal to a fourth combining element 64, which fourth combining element 64 also receives a signal from the first combing element 60 and from the measurement value comparing element 62. Based on these signals the forth combining element 64 generates an output signal SWO which actuates the switchover unit. The various combining units may with advantage perform logical OR operations on the signals they receive and are therefore in fig. 3 depicted as logical OR circuits.

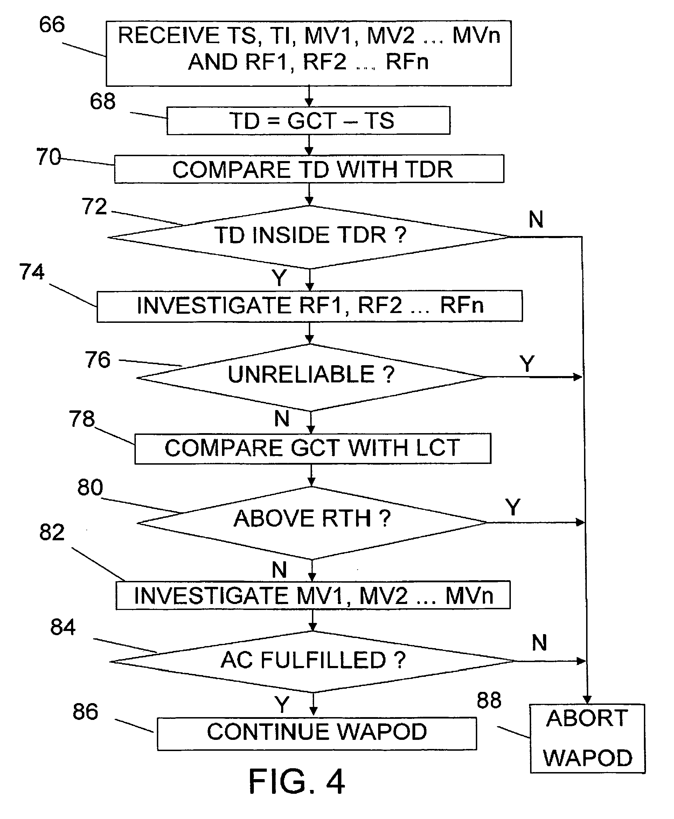

The operation of an actuator according to this first embodiment of the invention will now be described with reference being made to the previously described fig. 1, 2 and 3 as well as to fig. 4, which schematically shows a flow chart outlining a number of method steps being performed in a method according to an embodiment of the invention.

The measurement providing devices 12, 14, 16 are used to obtain complex voltages and currents, i.e. phasors, which have been derived from measurements at remote locations all over the system. The measurement providing devices 12, 14 and 16 are provided with GPS clocks, i.e. they have time keeping circuitry being in contact with reference clock devices in the form of GPS satellites 20, 22, 24 and 26 in order to provide accurate timing. For this reason all measurement providing devices 12, 14 and 16 are provided with antennas. Each antenna might listen to a number 'm' of satellites. These measurements then get time stamped TS by the time keeping circuitry. To these time stamped measurements or phasors a reliability field RF is furthermore added. Based on if a specific measurement providing device is in contact with GPS satellites or not, this field gets an associated setting. There is thus a flag being set if a measurement providing device is not in contact with a satellite. If the flag is set, the corresponding time stamp is therefore a time stamp that is only based on the local time keeping circuitry. It is thus unreliable. Data (in the form of phasors) P1, P2, Pn from all the measurement providing devices 12, 14, 16 are furthermore transmitted to the measurement aligning unit 28, which may thus be a central phasor data concentrator (PDC). The measurement aligning unit 28 is here included in the power oscillation damping arrangement 10, i.e. in the power control device of the first embodiment. However, it should be realized that it may also be separated from the power oscillation damping arrangement 10. This measurement aligning unit 28 is responsible for synchronizing the data received from all the measurement providing devices 12, 14, 16. According to the invention the measurements P1, P2, Pn having a first time stamp, here indicated with the time stamp TS, are received in the measurement aligning unit 28 of the power control device. It should here be realized that the GPS clocks of the measurement providing devices and the GPS clock of the power control device could listen to complete different set, or some common set or complete same set of satellites depending on their geographical locations. However, the use of GPS time information implies that all measurement providing devices and the power control device have the same time reference.

If the GPS time stamp information is found to be reliable then the wide area power oscillation damping unit 34 is to be employed. In order to determine this reliability the measurement aligning unit 28 extracts the measurement values MV1, MV2, MVn, the reliability flags RF1, RF2, RFn and the time stamps TS of the measurements P1, P2 and Pn and sends this extracted data to the timing deviation handling unit 30. The measurement aligning unit 28 also obtains the timing indicators TI indicating the time stamps of the most recently received measurements and provides these to the timing deviation handling unit 30. The timing deviation handling unit 30 also receives the signal NO_GT indicating whether a global timing is present or not from the GPS clock 32 as well as a global current time GCT from the GPS clock 32. The signal NO_GT indicates if the GPS clock 32 is in contact with a satellite in the same fashion as the reliability fields in the measurements from the measurement providing devices.

The wide area power oscillation damping unit 34 determines a control signal for use in power oscillation damping by the actuator control unit 40. In parallel with this the local power oscillation damping unit 36 also determines a control signal based on local measurements PL for use in power oscillation damping by the actuator control unit 40. Both these control signals are provided to the switchover unit 38 which selects one of them for provision to the actuator control unit 40. The one normally provided is the control signal from the wide area power oscillation damping unit 34. However, it is in some cases of interest to instead use the local area power oscillation damping unit 36 or no power oscillation control signal. The present invention is directed towards at least some of these situations.

One such situation is if the timing provided by time generating equipment is unreliable even though GPS clocks are used. Time generating equipment here typically comprises the reference clock devices 20, 22, 24 and 26 and the GPS clocks of the measurement providing devices 12, 14 and 16 and/or of the power control device 10. The timing could be unreliable for a number of reasons, such as lack of contact between measurement providing device and reference clock device, lack of contact between GPS clock in power control device and reference clock device, single faulty measurement providing device or a faulty reference clock device. It is thus necessary to investigate the accuracy of the timing used in relation to wide area control in a power transmission system and then especially in relation to wide area power oscillation damping.

The time stamps TS, the timing indicators TI, the measurement values MV1, MV2, MVn, and the reliability flags RF1, RF2, RFn are received in the timing deviation handling unit 30, step 66. More particularly the time stamps TS and timing indicators TI are received by the time delay determining element 52, the flags of the reliability fields RF1, RF2, RFn are received by the first combining element 60 and the measurement values MV1, MV2 and MVn are received by the value comparing unit 62.

The time delay determining element 52 here first determines at least one time delay TD of the measurements. Generally speaking one time delay TD may be determined through forming a difference between the global current time GCT and the time stamp TS, where the time difference may be expressed as $TD = GCT - TS$, step 68. This difference TD is then provided to the comparing element 54. The comparing element 54 then investigates the timing used in relation to the measurements through performing a comparison in relation to the time stamps of the separate measurement providing devices. It thus performs the comparison described above in relation to time stamped measurements of all measurement providing devices. This comparison is on the one hand performed in order to make sure that the time delay of the measurements is not too long, because if it is wide area power oscillation damping can no longer be carried out, and on the other hand in order to determine that the time stamps provided by the measurement providing devices are accurate enough, i.e. that they are reliable. For this reason the comparing element 54 compares the time delay TD of each measurement P1, P2, Pn with a time delay range TDR having an upper and a lower limit, step 70. In case a measurement aligning unit is used the measurements investigated will have the same time stamp.

The comparing element 54 thus compares the time delay TD of a measurement with an upper maximum delay time limit and if the maximum delay time limit is exceeded, wide area power oscillation damping is considered impossible to perform, aborted and a switchover to local power oscillation damping should be made. In other words, if the time delay is not below this maximum delay time limit the wide area control to be provided is considered unsuccessful. For inter-area modes of oscillation this maximum delay time limit may be set in relation to the period of the oscillation.

As discussed above, the time stamp TS provided by a measurement providing device can be unreliable, not because of a lack of contact with a reference clock device, which is handled in another part of the timing deviation handling unit 30, but because there is an internal fault in the measurement providing device in question. This means that the actual time delay would be the time delay described above plus/minus an error margin. Thus if the time stamp TS is unreliable such that the assumption of a common time reference does not hold then this will be interpreted as an additional "time delay" although the additional "time delay" in this case can be both positive and negative. According to the invention this error or additional "time delay" is in fact not considered at all when applying the upper limit of the range. This upper limit is only decided based on comparing the determined time delay with a maximum time delay in which power oscillation damping can be performed without considering the error margin or additional "time delay".

If the error or additional "time delay" is positive this only leads to an increased safety margin. It may here be possible to argue that if the additional "time delay" or error is negative so that the actual time delay would in fact be larger than the upper limit, then the comparing element would consider the time delay to be within limits and an incorrect control action would be the consequence. Now, this is a quite unlikely scenario for the following reason. The time delay can be described as a stochastic process with an average and a variance. Assuming that it is at commissioning verified that the average of the time delay is acceptable for the wide area control, timing the error with an outlier in time delay is more or less impossible. It would essentially require that the first time stamp is provided with an error and at the same time a coordinated actual time delay is introduced in the communication network.

The lower limit of the range on the other hand does consider the error margin or additional "time delay". Here the lower limit is set in relation to the fastest time a measurement can reach the power control units, i.e. wide area control units such as the wide area power oscillation damping unit. In this case the lower time limit is set in relation to the fastest time a measurement can reach the power control device. This minimum time delay limit is here normally zero. This means that if the determined time delay has a value that is clearly incorrect, like providing a time delay that is less than what is possible, for instance zero or even a negative time delay, i.e. an estimated time delay that indicates that the measurement was sent after it was received, then wide area control is aborted and a switchover to local control should be performed.

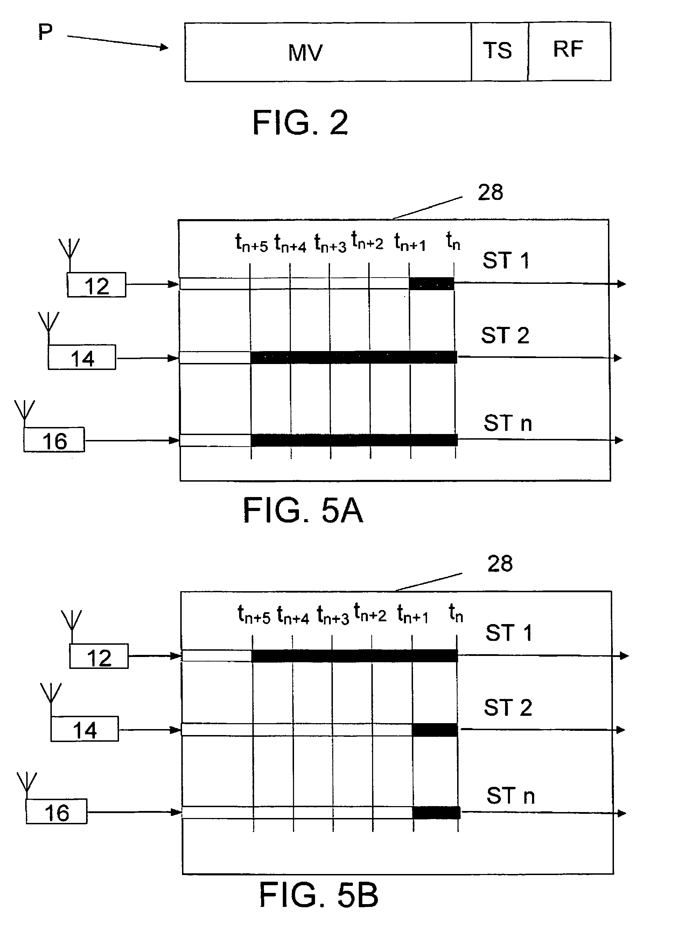

What has just been described is the general principle of comparing a time delay with a range. This is applicable if there is no measurement aligning unit. However, in the first embodiment described here there is such a measurement aligning unit 28, which waits for all the measurements associated with a time stamp to be received and then forwards all measurements with the same time stamp aligned with each other. The situation when there is a time delay error because of a faulty measurement providing device as a measurement aligning unit is used will now be described in more detail with reference also being made to fig. 5A, which schematically shows measurements delivered to a measurement aligning unit in the case of a positive time delay error, and to fig. 5B, which schematically shows measurements delivered to the measurement aligning unit in the case of a negative time delay error.

The measurement aligning unit 28 includes a number of stacks ST1, ST2, STn; one for each measurement providing device 12, 14 and 16, where measurements are stacked according to their time stamps or the time slots in which they are sent. The measurements at the bottom of each stack are then the most recently received measurements and the measurements at the top of each stack are the measurements in line to be delivered next to the wide area power oscillation damping unit 34. The top stack position is here provided to the right in fig. 5A and 5B and the bottom stack position to the left.

In the example given in fig. 5A the first measurement providing device 12 adds a positive time fault corresponding to four time slots to the correct time. The time stamps provided by this measurement providing device 12 will therefore show a lower value than the correct time. This means that if the faulty measurement providing device would provide a time stamp of $t_n$, then the actual time of generation of the time stamp would in fact be $t_{n+4}$. As the measurement aligning unit 28 waits for all measurements corresponding to the same time slot to be received before they are forwarded, this means that the measurements from the other measurement providing devices 14 and 16 are stacked up until the measurement with a faulty time stamp is received. This is shown in fig. 5A through the stacks ST 2 and ST n having measurements with time stamps corresponding to the times $t_n$, $t_{n+1}$, $t_{n+2}$, $t_{n+3}$ and $t_{n+4}$ in their stacks, while the stack ST 1 only has one measurement with a time stamp of $t_n$. Therefore if the faulty measurement providing device 12 provides incorrect time stamps such that these are shifted 4 time slots forward, the measurement time stamped as $t_n$ will actually be sent from the measurement aligning unit 28 at the time $t_{n+4}$. This means that the time delay of the correctly time stamped measurements will be increased with 4*At, where $\Delta t$ is length of a time slot, which may typically be 20 ms.

This means that if the time delay of the measurements delivered from the measurement aligning unit 28 to the wide area power oscillation damping unit 34, i.e. the ones provided at the top of the stacks in the measurement aligning unit 28, are compared with the upper limit of a range being set to a value that is lower than this increase of the time delay, then these timing faults may be automatically detected for some upper limits of the range. The timing requirements on a closed loop control system are often more severe than the time slot size used and therefore a positive time fault may be detected through this measure without any additional investigations. This means that a positive time fault will normally make the time delay exceed the maximum time delay allowed and therefore this can also be used for detecting positive time delay faults. This is also clear since correctly timed measurements are delayed, which will give a clear indication of a faulty timing

Fig. 5B shows the same situation for a negative time fault. Here the first measurement providing device 12 adds a negative time fault corresponding to four time slots to the correct time. The time provided by this measurement providing device 12 will therefore show a higher value than the correct time. This means that if the actual time of generation of the time stamp is $t_n$, then the faulty measurement providing device would provide a time stamp of $t_{n+4}$ while the measurements from the other measurement providing devices 14 and 16 would provide measurements having time stamps $t_n$. In this case it is not possible to detect a faulty timing through analysing the measurements delivered by the measurement aligning unit because the faulty timing cannot be separated from the correct timing.

By instead investigating the bottom of each stack, i.e. by looking at the most recently received measurements in the measurement aligning unit 28, it is possible to detect the incorrect time stamp. If for instance the current time is $t_n+\varepsilon$, where is the delay of the measurements through the system, then it can be seen that the time delay of the second and nth measurement providing devices 14 and 16 in reaching the measurement aligning unit will be $\varepsilon$. However, the corresponding delay of the measurement from the first measurement providing device 12 will instead be $\varepsilon - 4^*\Delta t$, which will be negative if $\varepsilon < At/4$. This is clearly not possible and therefore a timing error can be determined if this time delay is below a minimum value, for instance zero or $\varepsilon$.

This means that when a measurement aligning unit is included it is possible to determine one time delay of measurements P1, P2, Pn after delivery by the measurement aligning unit 28. This time delay is then compared with the upper limit of the range and is provided for positive time delay errors. This has generally been described above in relation to the general principle of comparing time delays. It is also possible to determine another time delay for measurements being received by the measurement aligning unit 28, which time delay is compared with the lower limit of the range and provided for negative time delay errors. In order to do this it is possible to obtain the measurements at the bottom of the stacks ST 1, ST2, ST n , i.e. the most recently received measurements, extract their time stamps and provide them to the time delay determining element 52 as timing indicators TI, which forms the other time delay TD based on the difference between the current time GCT and these timing indicators TI. This other time delay is then compared with the lower limit of the range by the time comparing element 54. Here it should be realized that it is as an alternative possible to obtain the time of these time stamps based on counting the number of measurements in the stack. This number together with the known interval at which measurements are received can then be used in order to estimate the time stamp of the most recently received measurement of the stack.

The determining of a timing indicator TI in this way by the measurement aligning unit 28 may be expressed as:

$$TI = TS + \Delta T * ST_{MAX},$$

where TI is the timing indicator, TS the time stamp of the measurement being processed or delivered to the wide are power oscillation damping unit, $\Delta T$ is the time slot length, i.e. the normal measurement delivery and reception time interval and $ST_{MAX}$ is the size of the largest stack.

As mentioned above, it is here possible that the measurement aligning unit 28 performs this estimation and provides the estimated time stamp as a timing indicator TI to the time delay determining element 52. However, it is also possible that the measurement aligning unit 28 provides a timing indicator TI as a stack size indicator, which indicates how many measurements are in the stack. In this case the time delay determining element 52 would itself estimate the time stamp of the most recently received measurement based on the time stamp TS of the delivered measurement and the stack size.

In this way the timing used in relation to measurements is investigated and a determination is made if the timing is reliable or not based on the investigation. Here this also involves investigating the time stamps of the measurements and a determination is made if one or more of the time stamps are reliable or not, where wide area control is then aborted if the timing is unreliable and here if one or more of these time stamps are unreliable. A comparison is thus made for the determined or estimated time delay. If the estimated one or more time delays TD are inside the range, step 72, further investigations are made concerning reliability, while if they are outside the range, step 72, i.e. outside the limits, the comparing element 54 provides a signal to the third comparing element 56 indicating that wide area control should be aborted and a switchover should be made.

The first combining element 60 also investigates the timing used in relation to measurements through investigating the reliability field settings RF1, RF2, RFn of the measurements P1, P2, Pn, step 74. If none of these indicate a lost connection with a reference clock device, i.e., the time stamps are reliable, step 76, further investigations are made, while if at least one field has such a setting or flag indicating lost connection with a reference clock device, then the first combining element 60 generates a signal indicating that wide area control should be aborted and a switchover to local power oscillations damping should be performed. A determination is thus made if the timing is reliable or not based on the investigation.

If all receiving units (measurement providing devices and power control device) obtain a common time reference, but the actual time is corrupted then the time delay estimation may appear correct although the actual time delay is too large. This is according to the invention handled through comparing the global current time GCT from the GPS clock 32 with a local current time LCT of the local clock 42, step 78. Now, the local clock 42 is probably less accurate, but good enough for providing a reliability check of the GPS time information. The GPS clock 32 thus provides a time that is obtained via the reference clock devices. If the difference between the GPS clock 32 and the local clock 42, taken over a window, differs too much (for instance more than the difference in accuracy) then switchover to local power oscillation damping is initiated. This may be done through the GPS clock 32 providing the global current time to the time capturing element 48, which continuously reads this time signal in the form of 'ms of the day' for a configurable time (say for 200ms) in a sliding time capturing window. The local clock 42, which may for instance have a 1 ms time period, also sends a local current time LCT to the counter 44, which may be resettable and has the same value as the length of the sliding window. The local clock may then be ticking at 1 ms precision. At the end of each counting period (200ms) output of the time capturing window may be compared against the counter final value which is then set to a fixed value (200ms) in the timing comparing element 46. Ideally they should exactly match. But if the timing difference is negligibly small, i.e. below a reliability threshold RTH, step 80, further investigations are made. However, if the timing difference is above the reliability threshold RTH, step 80, then the timing comparing element 46 provides a signal to the second combining element 50 indicating that a switchover should be ordered. The reliability threshold RTH may be set according to the reliability of the timing of the local clock 42. If for instance the timing difference is higher than this reliability of the local clock 42 or higher than the difference in nominal reliability of the two clocks then an aborting of wide area control may be indicated. Here it is possible to also include a safety margin. In this way the timing used in relation to the measurements is investigated for a faulty GPS clock and a determination is made on the reliability base don this investigation.

The second combining element 50 also receives the signal NO_GT. This signal is combined with the signal from the timing comparing element 46. This means that if this signal NO_GT indicates that the GPS clock has lost the connection with reference clock devices or the signal from the timing comparing element 46 indicates that wide area control should be aborted, then also the second combining element 50 generates a signal indicating that wide area control should be aborted.

The third combining element 56 is connected to the comparing element 54 and the second combining element 50 and if any of these generate a signal indicating that wide area control should be aborted, then the third combining element 56 in turn generates a signal indicating that wide area control should be aborted, which signal is supplied to the fourth combining element 64.

The value comparing element 62 also performs an investigation of the measurement values MV1, MV2 and MVn with regard to an applicability criterion AC. This applicability criterion AC may be that a difference angle between two complex voltage angles is above 180 degrees. Such an angle difference is an indication that the system has split up and that measurements from islanded parts of the system are compared..In this case wide area control should be aborted and a switchover made to local control. Therefore the measurement values are investigated in relation to the applicability criterion AC, which may be that the angles of a pair of phasors should be separated by less than 180 degrees with a suitable margin. If this applicability criterion is fulfilled, step 84, then continued wide area control, here continued wide area power oscillation damping (WAPOD), is allowed, step 86, while if it is not, step 84, then the value comparing element 62 provides a signal to the fourth combining element 64 indicating that wide area control should be aborted and a switchover should be made. A difference angle between two such phasors, which may originate in two separate geographical arras swinging against each other, may thus be compared with an angle threshold and if the difference angle exceeds the angle threshold, then wide area power oscillation damping is aborted.

If the fourth combining element 64 receives such a signal then wide area control is aborted, step 88, here wide area power oscillation damping (WAPOD). This aborting is here accompanied by a switchover to local power control. The switchover is more particularly performed through the fourth comparing element 64 generating a switchover signal SWO in case any of the signals provided from the first combining element 60, the third combining element 56, and the value combining element 62 indicate that a switchover should be made.

The switchover signal SWO is then supplied to the switchover unit 38 which changes the operation of the power control device so that now the control signal from the local area power oscillation damping unit 36 is provided to the actuator control unit 40 instead of the control signal from the wide area power oscillation damping unit 34. The power oscillation damping is thus switchable between local and wide area power oscillation damping and local power oscillation damping is initiated when wide area power oscillation damping has been aborted.

In this way wide area control is aborted based on the reliability of the timing used. The present invention thus presents a number of measures that provides increased reliability in a power transmission system, especially in relation to the timing used by time generating equipment of the system. This is especially important in closed loop control systems. This is furthermore done while at the same time considering other restraints on the control.

Wide area power oscillation damping may be based on a difference angle between phasors from two geographical areas. In the wide area power oscillations damping, it is possible to compensate for some of the delays in the system. Efficiently, known controllers acting as wide area power oscillation damping units can in this respect be used without the need to modify their structure. In order to compensate for the time delays, controller parameters are suitably adjusted in accordance with the following variation of the present invention.

Generally, power networks utilise so-called lead-lag controllers to improve undesirable frequency responses. Such a controller functions either as a lead controller or a lag controller at any given time point. In both cases a pole-zero pair is introduced into an open loop transfer function. The transfer function can be written in the Laplace domain as:

$$\frac{Y}{X} = \frac{s - z}{s - p}$$

where X is the input to the controller, Y is the output, s is the complex Laplace transform variable, z is the zero frequency and p is the pole frequency. The pole and zero are both typically negative. In a lead controller, the pole is left of the zero in the Argand plane, $|z| < |p|$, while in a lag controller $|z| > |p|$. A lead-lag controller consists of a lead controller cascaded with a lag controller. The overall transfer function can be written as:

$$\frac{Y}{X} = \frac{(s - z_1)\,(s - z_2)}{(s - p_1)\,(s - p_2)}$$

Typically $|p_1| > |z_1| > |z_2| > |p_2|$, where $z_1$ and $p_1$ are the zero and pole of the lead controller and $z_2$ and $p_2$ are the zero and pole of the lag controller. The lead controller provides phase lead at high frequencies. This shifts the poles to the left, which enhances the responsiveness and stability of the system. The lag controller provides phase lag at low frequencies which reduces the steady state error.

The precise locations of the poles and zeros depend on both the desired characteristics of the closed loop response and the characteristics of the system being controlled. However, the pole and zero of the lag controller should be close together so as not to cause the poles to shift right, which could cause instability or slow convergence. Since their purpose is to affect the low frequency behaviour, they should be near the origin.

The article "Application of FACTS Devices for Damping of Power System Oscillations", by R. Sadikovic et al., proceedings of the Power Tech conference 2005, June 27-30, St. Petersburg RU, addresses the selection of the proper feedback signals and the subsequent adaptive tuning of the parameters of a power oscillation damping (POD) unit or controller in case of changing operating conditions. It is based on a linearized system model, the transfer function G(s) of which is being expanded into a sum of N residues:

$$G(s) = \sum_{i=1}^{N} \frac{R_i}{(s - \lambda_i)}$$

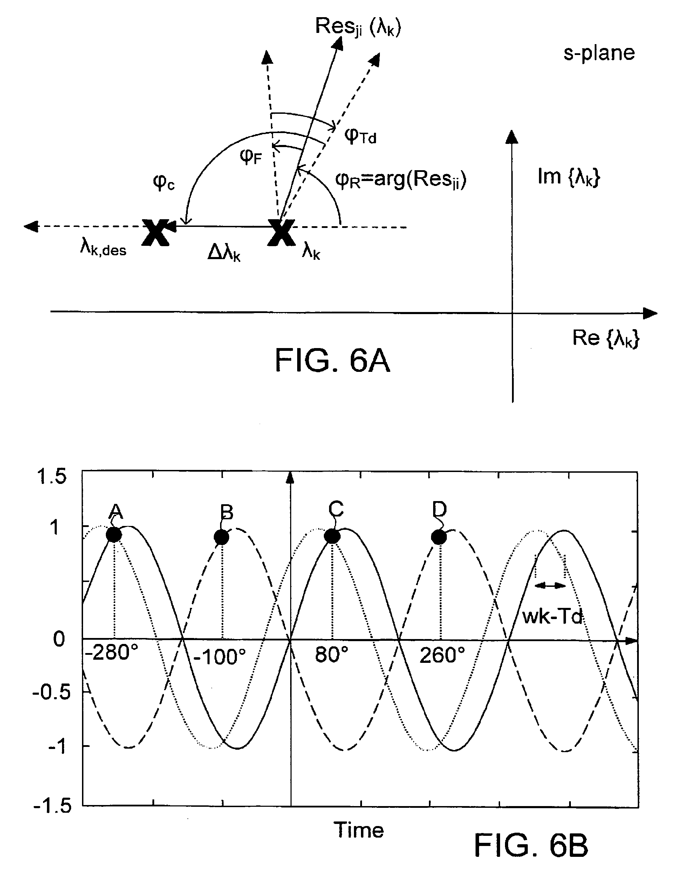

The N eigenvalues $\lambda_i$ correspond to the N oscillation modes of the system, whereas the residue $R_i$ for a particular mode gives the sensitivity of that mode's eigenvalue to feedback between the output and the input of the system. It should be noted that in complex analysis, the "residue" is a complex number which describes the behavior of line integrals of a meromorphic function around a singularity. Residues may be used to compute real integrals as well and allow the determination of more complicated path integrals via the residue theorem. Each residue represents a product of modal observability and controllability. Figure 6A provides a graphical illustration of a phase compensation angle $\phi_c$ in the s-plane caused by the wide area power oscillations damping unit 34 in order to achieve a desired shift $\lambda_k = \alpha_k + j.\omega_k$ of the selected/critical mode k, where $\alpha_k$ is the modal damping and $\omega_k$ is the modal frequency. The resulting phase compensation angle $\phi_c$ is obtained as the complement to $+\pi$ and $-\pi$, respectively, for the sum of all partial angle contributions obtained at the frequency $\omega_k$ starting from the complex residue for mode $\lambda_k$, input I and output j, is $\text{Res}_{ji}(\lambda_k)$, all employed (low- and high-pass) prefilters. $\phi_R$ is the angle of residue and $\phi_F$ is the phase shift caused by the prefilters.

Figure 6A also graphically illustrates a pole-shift in the s-plane for a power oscillations damping unit in order to achieve a desired shift $\lambda_k = \alpha_k + j.\omega_k$ of a mode of interest, k, where $\alpha_k$ is the modal damping and $\omega_k$ is the modal frequency. The resulting phase compensation angle $\phi_c$ is obtained as the complement to $+\pi$ and $-\pi$, respectively, for the sum of all partial angle contributions obtained at the frequency $\omega_k$ starting from the complex residue for mode $\lambda_k$, input i and output j, is $\text{Res}_{ji}(\lambda_k)$, all employed (low- and high-pass) prefilters. $\phi_R$ is the angle of residue and $\phi_F$ is the phase shift caused by the prefilters. $\phi_{Td}$ is the phase shift representing time delay Td at frequency $\omega_k$

The adjustment of the controller parameters is determined in the following manner. With reference to Figure 6B, a control signal is denoted by the dotted oscillating line. For simplicity, an undamped sine wave is shown. The control signal is phase shifted from the oscillating signal, represented by a solid line. The phase shift between the signal and the feedback signal is $(\omega_k.Td)$ wheres $\omega_k$ is the frequency of the mode being damped and Td is the time delay. Therefore, the time delay may be described as a phase shift at the oscillatory frequency of interest. It can be seen in Figure 6B that the time delay corresponds to lagging 60° at the dominant frequency $\omega$. The related modified compensation angles are calculated from the residue, phi. In this example, phi is 80°. The four solutions for the modified compensation angle which compensate for the phase shift are described as; lag to +1, lag to -1, lead to +1, lead to -1. With reference to Figure 6B, the four solutions are graphically illustrated by the four points on the waves denoted as A, B, C, D, respectively. The actual values in this example can be seen to be -280°, -100°, 80°, 260°, respectively.

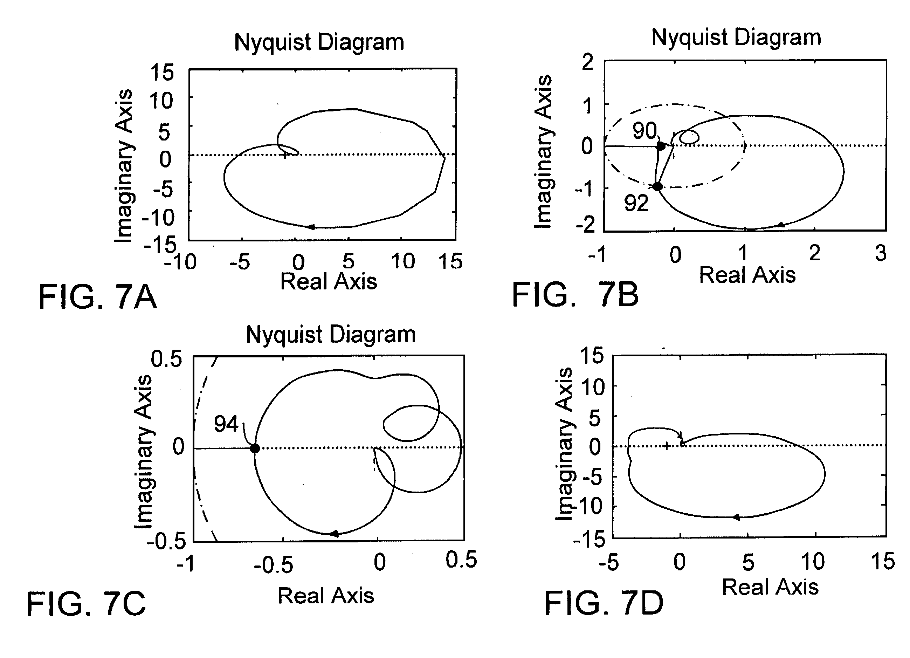

The next step in the adjustment of the controller parameters of the present invention utilises Nyquist diagrams. A Nyquist diagram is used in automatic control and signal processing for assessing the stability of a system with feedback. It is represented by a graph in which the gain and phase of a frequency response are plotted. The plot of these phasor quantities shows the phase and the magnitude as the distance and angle from the origin. The Nyquist stability criterion provides a simple test for stability of a closed-loop control system by examining the open-loop system's Nyquist plot (i.e. the same system including the designed controller, although without closing the feedback loop). In the present variation of the invention, the four solutions are plotted on four Nyquist diagrams in order that the optimal solution can be readily determined. Figures 7A - 7D show an example of four such control solutions.

In Figures 7A and 7D the control solutions are not stable because the route of the plot encircles the stability point -1,0. Figure 7B shows a Nyquist diagram of the first stable control solution based on remote feedback signals. The black point 90 near the real axis represents the gain stability margin and the black point 92 on the unit circle indicates the phase stability margin. The route of the plot forms a clear loop which shows that the control system will have a relatively high stability margin. Figure 7C shows a Nyquist diagram of the second stable control solution of the example in Figures 6A and 6B. The black point 94 near the real axis represents the gain stability margin. The phase stability margin is infinite in this case, as there is no intersection with unit circle. The route of the plot forms a clear loop which shows that the control system will also have a high stability margin. The dot-dash line around zero represents the unit circle.

The Nyquist diagrams for the four solutions are compared in order to determine the single solution having the highest stability for the control system. It should be noted that all four solutions are compensating the same mode and they are designed to achieve the same eigenvalue/pole shift of the critical oscillatory mode in the s-plane. However, due to the eigendynamics of the controller, each resulting closed-loop solution has totally different properties which are visible in the Nyquist diagrams shown in Figures 7A - 7D. Thus, the influence on the closed loop system behaviour can be different for each solution and it may be possible to clearly identify the single solution having the highest stability for the control system. However, if none of the solutions can clearly be identified as the best solution utilising the Nyquist diagrams then a second stage in the analysis is pursued.

In this second stage, the Bode diagram of each of the solutions is constructed. A Bode diagram is a combination of a Bode magnitude plot above a Bode phase plot. A Bode magnitude plot is a graph of log magnitude versus frequency, plotted with a log-frequency axis, to show the transfer function or frequency response of a linear, time-invariant system. The magnitude axis of the Bode plot is usually expressed as decibels, that is, 20 times the common logarithm of the amplitude gain. With the magnitude gain being logarithmic, Bode plots make multiplication of magnitudes a simple matter of adding distances on the graph (in decibels), since log (a . b) = log (a) + (b). A Bode phase plot is a graph of phase versus frequency, also plotted on a log-frequency axis, usually used in conjunction with the magnitude plot, to evaluate how much a frequency will be phase-shifted. For example a signal described by: $A\sin(\omega t)$ may be attenuated but also phase-shifted. If the system attenuates it by a factor x and phase shifts it by $-\phi$ the signal out of the system will be $(A/x) \sin(wt - \phi)$. The phase shift $\phi$ is generally a function of frequency. Phase can also be added directly from the graphical values, a fact that is mathematically clear when phase is seen as the imaginary part of the complex logarithm of a complex gain.

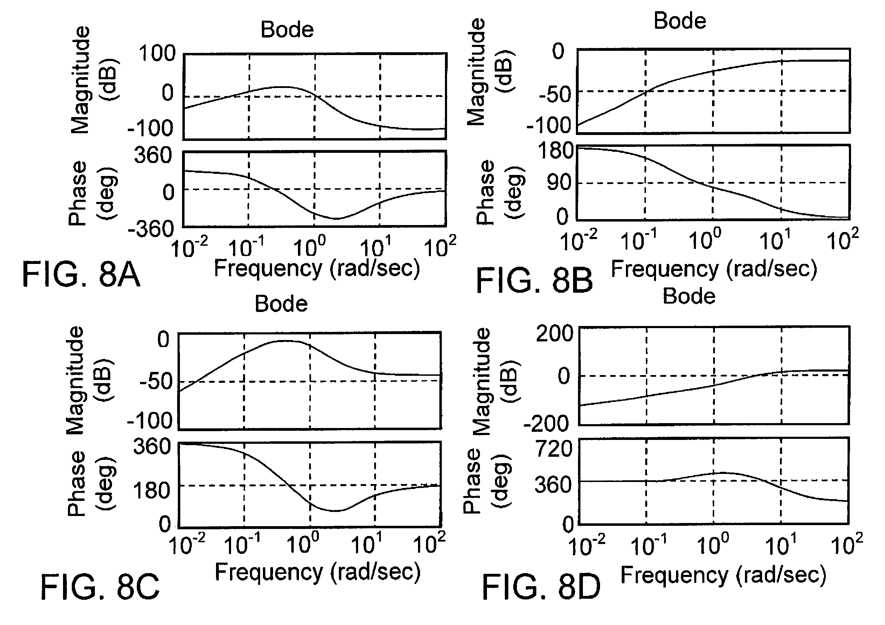

Thus, Bode diagrams for the four solutions are shown in Figures 8A - 8D and are compared in order to determine the single solution having the most preferable gain characteristics. Figure 8A shows a Bode diagram of the first control solution based on remote feedback signals. Decaying gain at high frequencies can be observed. Figure 8B shows a Bode diagram of the second control solution based on remote feedback signals and high gain at high frequencies can be observed. Thus, the influence on the closed loop system behaviour caused by measurement noise and/or interaction with other modes will be different for each solution and it may be possible to clearly identify the single solution having the most preferable gain characteristics. However, if none of the solutions can clearly be identified as the best solution utilising the Bode diagrams of the designed controllers then a third stage in the analysis is pursued.

In the third stage, the complex frequency domain graph of the control solutions may be constructed. In such a complex frequency domain graph, the x-axis represents the real part of s, which is absolute modal damping, and the y-axis represents the imaginary part of s, which is modal frequency in radians per second. The s-plane transforms are commonly known as Laplace transforms hence in the s-plane, multiplying by s has the effect of differentiating in the corresponding real time domain and dividing by s has the effect of integrating. Each point on the s-plane represents an eigenvalue or a transfer function pole.

With reference to Figure 6A, a control solution is illustrated. The cross denoted as $\lambda_k$ represents the situation without any damping controller and the cross denoted as $\lambda_{k'des}$ shows an improvement in damping caused by the selected controller or power oscillations damping unit, because the change of the eigenvalue location is towards the left half of the s-plane.

It will be clear to the skilled person that in the majority of cases, the first stage of the analysis in which the four solutions are plotted on four Nyquist diagrams will be adequate to distinguish which is the optimal solution. In such instances, the second and third stages are not performed. However, if the comparison of the Nyquist diagrams does not reveal a single optimal solution, then the second stage can be pursued. For example, if three out of the four solutions show equally acceptable solutions, then Bode diagrams of the obtained controllers for only those three solutions are constructed and analysed. Further, if the comparison of the Bode diagrams does not reveal a single optimal solution, then the third stage can be pursued. For example, if two out of the three compared solutions show equally acceptable solutions, then complex frequency domain graphs of only those two solutions in s-plane are constructed and the location of eigenvalues analysed. This enables the single best solution to be determined.

Once the single best solution for the compensation angle has been determined, the phase shift (representative of the time delay) can be rectified. As a result, the closed loop control provides similar performance to a system in which no time delays are present in the feedback loop.

In summary, when in operation, the power oscillations damping unit performs the following method steps. In a first step, four parameters are obtained; the frequency of the oscillatory mode to be damped $\omega_k$, phase shift caused by the prefilters $\phi_F$, the phase shift caused by the residue angle $\phi_R$, and the time-delay in the control loop Td. In a second step, the total compensation angle $\phi_c$ considering the effect caused by the time-delay is calculated in the following manner;

$$\phi_{Td} = \text{rem}\,(\omega_k . \text{Td} , 2\pi)$$

$$\phi = \phi_F + \phi_R - \phi_{Td}$$

$$\phi_c = rem\,(\phi\,,\;2\pi)$$

where rem (x, y) is the remainder after division x/y.

In a third step, four possible compensation angles are calculated in the presented controller design procedure (leading and lagging solutions with respect to both positive and negative feedbacks denoted as solutions A, B, C and D). According to a fourth step the four potential controllers are designed from the four compensation angles using the lead-lag approach phasor controller. In a fifth step, the closed loop stability and the stability margin are evaluated for each of the four solutions. The controller (s) having the highest stability margin are selected by using, for example, Nyquist diagrams. In a sixth step, this selection may be combined with the evaluation of the dynamic behaviour of the controller itself. A potential controller solution with decaying gain in high frequency range (lagging) or with decaying gain in low frequency range (leading) is selected depending on its possible interactions with other modes or controllers. This is determined through creating a plot of the gain characteristics, for example, a Bode plot. In a final step, the potential controller solution with the highest stability margin is selected.

The original input data for this sequence of method steps is obtained through repeated analysis of a power system from measured data over a predetermined period of time (a model is created from this data) or from an existing power system model and the procedure described above is executed upon this model. Namely, the first action to be executed comprises obtaining the parameters $\omega_k$, $\phi_F$, $\phi_R$, and Td.

At the end of the procedure the optimal compensation angle is selected and this optimal compensation angle is applied to the feedback signals through adjusting the parameters of the lead-lag controller.

In summary, the size of the time delay as determined by the power control device may result in one of the following outcomes:

- time delay of about 10% or less of the oscillating signal period means that the control system proceeds with the control algorithm as if there was no time delay.
- substantial time delay, but of less than 100% of the oscillation signal period, means that the control system proceeds with the control algorithm compensates for the time delay.
- A time delay of 100% or more of the oscillation signal period results in the cancellation of the control algorithm to ensure that adverse effects on the power system are avoided.

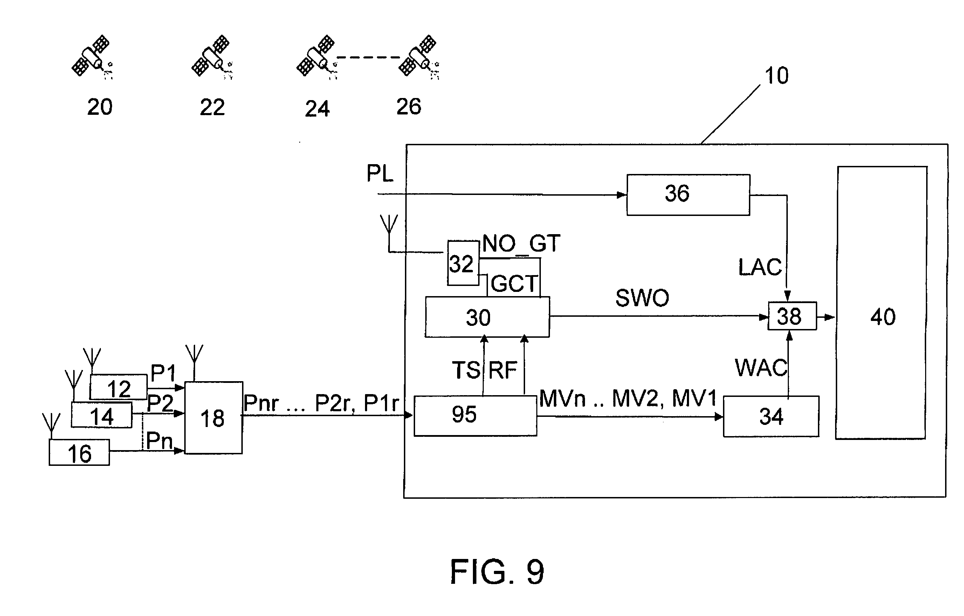

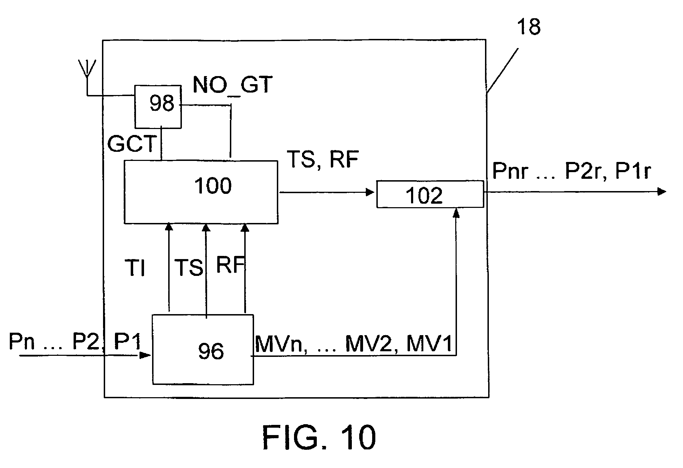

As was mentioned above it is possible that the measurement aligning unit is not a part of the power oscillation damping arrangement. It may be provided as a separate entity. Fig. 9 and 10 schematically outlines such a situation according to a second embodiment of the present invention.

Fig. 9 resembles fig. 1 and differs from this figure through the measurement aligning unit 18 being provided as a separate entity from the power oscillation damping arrangement 10. It is also provided with its own GPS clock, which is indicated through being equipped with an antenna. This measurement aligning unit 18 communicates with a buffer 95 in the arrangement 10. The measurement aligning unit 18 provides measurements P1r, P2r, Pnr to the buffer 95 and in this buffer 95 the measurement values MV1, MV2 and MVn of the measurements P1 r, P2r and Pnr are extracted and provided to the wide area power oscillation damping unit 34. The time stamps TS and reliability field settings RF of these measurements are also extracted in this buffer 95 and provided to the timing deviation handling unit 30. The timing deviation handling unit 30 may in this embodiment be provided with a sensor (not shown) sensing if there is a connection between the power oscillation damping equipment and the measurement aligning unit 18. The sensor would then provide a signal to the timing deviation handling unit 30 reflecting if there is such a connection or not.

The measurement aligning unit 18 depicted in fig. 10 includes an input buffer 96 where measurements P1, P2, Pn from measurement units 12, 14 and 16 are received and unpacked. In this buffer, the previously mentioned stacks are provided and when all measurements of a certain time stamp are provided, these measurements MV1, MV2, MVn are provided to an output buffer 102 of the unit 18, where the measurement values are repacked and sent as measurements Pn1, Pn2 .. Pnr to the buffer 95. In the measurement aligning unit 18 there is furthermore a timing error determining element 100, which obtains the timing indicator TI , time stamps TS and reliability field settings RF of the measurements in the input buffer 96. To the timing error determining element 100 there is also connected the previously mentioned GPS clock 98. The timing error determining element 100 checks the reliability of the timing using the time stamp TS, the timing indicator TI and the global current time GCT. If the timing is incorrect it sets a reliability flag, at least for the measurement for which the faulty timing is determined. Such flags may as an alternative be set for all the measurements. The reliability fields that are not set in this way remain unchanged. The settings of the reliability fields RF and time stamps TS are then provided to the output buffer 102, where these are packed with the measurement values belonging to these time stamps.

According to this embodiment of the invention, the measurement aligning unit 18 is thus provided with a timing error determining element 100 that determines the time delays according to the timing indicators TI corresponding to the time stamps of the measurements that it has received most recently. As mentioned earlier this determination may thus use the time stamps TS of the measurements that are to be delivered, the global current time GCT as well as data concerning delay in the input buffer stack, i.e. stack size and time slot length. The timing error determining element 100 then compares these time delays with the lower end of the time delay range and determines that there is a timing error if this time delay is below the lower limit of the range. This timing error is then indicated through setting one or more of the reliability flags in the reliability fields RF, which flags are then provided to the output buffer 102 where they are packaged with the measurements P1r, P2r, Pnr that are then delivered to the buffer 95. From buffer 95 these reliability field settings RF and the time stamps TS are then provided to the timing deviation handling unit 30, which switches over to local power oscillation damping if at least one reliability flag is set and otherwise performs the rest of the timing investigations described in relation the first embodiment. The timing deviation handling unit 30 may also perform an investigation concerning if the connection is lost between the power oscillation damping arrangement 10 and the measurement aligning unit 18 and also disables wide area power oscillation based on this.

In this second embodiment the investigation of the measurement values have been omitted. However, it is possible to perform also in this embodiment, either in the timing deviation handling unit 30 or in the measurement aligning unit 18. It is also possible that the timing error determining element of the measurement aligning unit 18 performs the other timing reliability investigations, i.e. compares the time delay of the delivered measurements with the upper limit of a range and investigates the reliability of the reference clock devices. It is in this case possible that the timing error indicator will reflect all these investigations. The investigation of the upper limit of the range and the reliability of the reference clock devices may here also be performed by the timing deviation handling unit.

The power control device according to the invention may with advantage be provided in the form of one or more processors together with an internal memory including computer program code, which when being operated on by the processor performs the above mentioned power control device functionality. It will thus be apparent to the skilled man that the power control device of the present invention may be hardwired, such as provided in the form of discrete components as indicated in fig. 3, or implemented as a computer program. Such a computer program may also be provided on a computer program product, such as one or more data carriers, like memory sticks or CD ROM disks, carrying the above mentioned computer program code.

In one variation the process control device may be run on a wide-area monitoring and control platform. In a further preferred embodiment, the power control device of the present invention may be run on a PDC.

The power control device of the present invention may thus be run in a control system for power electronics actuators e.g. FACTS, HVDC, PSS, generator excitation systems etc.

A number of further variations of the present invention are possible. The checking of the correctness off the global current time of the GPS clock described above could as an alternative be of a continuous sliding window type instead of sliding in pre-configurable steps. Reliability investigations could also be performed in individual measurement providing devices in order to detect any errors in GPS signals during time stamping of measured complex voltages and currents. There are a number of further fields that may exist in measurements in addition to the above described reliability fields. These fields include fields with status flags such as CT and PT ratio flags and,measured data validity flags. It is also possible to consider these fields when aborting wide area control. It should also be realized that all investigations that are not related to reliability of timing could be omitted from the method depicted in fig. 4. It is in fact possible to perform only some of the reliability investigations as well and to only perform one timing reliability investigation, such as the time delay investigation. It should also be realized that in the case of power oscillation damping, wide area power oscillation damping may be aborted without performing any local power oscillation damping.

As was indicated above, the measurement aligning unit may be omitted from the power control device. If one is provided in the system separate from the power oscillation damping arrangement, then any timing error determining element of it may be included in the power control device together with appropriate elements of the timing deviation handling unit. In this case the timing deviation handling unit may be considered as being distributed, with one part being provided in the power oscillation damping arrangement and the other part, the timing error determining element, being provided in the measurement aligning unit. The timing deviation handling unit can also be provided solely in the measurement aligning unit. It is also possible to remove one or more of the wide area control unit, local area control unit and switchover unit from the power control device. These may if needed then be provided as separate devices. It should also be realized that the elements performing the above-mentioned investigations in the above mentioned method steps that are possible to omit could consequently also be omitted.

Whilst the foregoing description of the invention describes a system for power oscillation damping, the skilled person will be aware that further embodiments may be envisaged where power oscillation damping is not involved. Specifically, control schemes for remote voltage control and/or control schemes for avoiding loss of synchronism. Therefore the present invention is only to be limited by the following claims.

## Claims

1. A method for evaluating the accuracy of timing provided by time generating equipment (12, 14, 16, 20, 22, 24, 26, 28, 32) in relation to wide area control in a power transmission system, said wide area control being performed in said power transmission system based on time stamped measurements (P1, P2, Pn) of system data, the time stamped measurements comprising time stamps (TS), the method comprising the steps of:

> investigating (68, 70, 74, 78) the timing used in relation to the measurements,
> determining (72, 76, 80) if the timing is reliable or not based on the investigation,
> aborting (88) wide area control if the timing is deemed unreliable,
> and wherein the step of determining if the timing is reliable or not comprises determining if one or more of the time stamps (TS) are reliable or not.

2. A method according to claim 1, wherein the investigating of the time stamps comprises determining (68) at least one time delay (TD) between the time stamps (TS) of measurements intended for use in wide area control and the time (GCT) at which these measurements are received by a measurement collecting device of the system, comparing (68) the time delay with a time delay range (TDR) having an upper and a lower limit and performing the step of aborting wide area control if (72) the determined time delay is outside of this range.

3. A method according to claim 2, wherein the system comprises a measurement aligning unit (28; 18) that aligns the measurements according to their time stamps.

4. A method according to claim 3, wherein the step of determining at least one time delay comprises determining a time delay for measurements (P1, P2, Pn) after delivery by said measurement aligning unit, which time delay is compared with the upper limit of the range.

5. A method according to claim 3 or 4, wherein the measurement aligning unit is one measurement collecting device and the step of determining at least one time delay comprises determining a time delay for measurements (P1, P2, Pn) being received by the measurement aligning unit, which time delay is compared with the lower limit of the range.

6. A method according to any previous claim, wherein the time stamped measurements are obtained from measurement value providing devices (12, 14, 16) that are in contact with at least one reference clock device (20, 22, 24, 26).

7. A method according to claim 6, wherein the time stamps (TS) of the measurements are accompanied by a setting (RF) indicating a lost contact with reference clock devices, the step of investigating involves investigating (74) if such a setting exists in the measurements and the step of aborting involves aborting wide area control if this setting exists in at least one measurement.

8. A method according to claim 6 or 7, wherein the step of investigating the timing involves comparing (78) the time (GCT) provided via the reference clock device (20, 22, 24, 26) with the time (LCT) of a local clock (42) and aborting wide area control in case (80) the difference exceeds a reliability threshold (RTH).

9. A method according to any of claims 6 - 8, further comprising the step of investigating (82) measurement values (MV1, MV2, MVn) of measurements from at least two different measurement providing devices in relation to an applicability criterion (AC) and aborting wide are control if (84) the applicability criterion is not fulfilled.

10. A power control device (10) for evaluating the accuracy of timing provided by time generating equipment (12, 14, 16, 20, 22, 24, 26, 28, 32) in relation to wide area control in a power transmission system, said wide area control being performed in said power transmission system based on time stamped measurements (P1, P2, Pn) of system data, the time stamped measurements comprising time stamps (TS), the device further comprising:

> a timing deviation handling unit (30) configured to
> investigate the timing used in relation to the measurements,
> determine if one or more of the time stamps are reliable or not, and
> thereby determine if the timing is reliable or not based on the investigation, and
> abort wide area control if the timing is deemed unreliable.

11. A device according to claim 10, wherein the timing deviation handling unit comprises a time delay determining element (52) configured to determine at least one time delay (TD) between the time stamps (TS) of measurements intended for use in wide area control and the time (GCT) at which these measurements are received by a measurement collecting device of the system and a comparing element (54) configured to compare the time delay with a time delay range (TDR) having an upper and a lower limit and enable aborting of wide area control if the determined time delay is outside of this range.

**12.** A device according to claim 11, wherein the system comprises a measurement aligning unit (28; 18) that aligns the measurements according to their time stamps.

**13.** A device according to claim 12, wherein the time delay determining element when being configured to determine at least one time delay is configured to determine a time delay for measurements (P1, P2, Pn) after delivery by said measurement aligning unit, which time delay is compared with the upper limit of the range.

**14.** A device according to claim 12 or 13, wherein the measurement aligning unit is one measurement collecting device and the time delay determining element when being configured to determine at least one time delay is configured to determine a time delay for measurements (P1, P2, Pn) being received by the measurement aligning unit, which time delay is compared with the lower limit of the range.

**15.** A device according to any of claims 10 - 14, wherein the timing deviation handling unit comprises a combining element (60) configured to obtain a setting (RF) indicating a lost contact with reference clock devices and enable aborting of wide area control if this setting exists in at least one measurement.

**16.** A device according to any of claims 10-15, wherein the timing deviation handling unit comprises a timing comparing element (46) configured to compare the timing (GCT) provided via the reference clock device with the timing (LCT) of a local clock (42) and enable aborting of wide area control in case the difference exceeds a reliability threshold (RTH).

**17.** A device according to any of claims 10 - 16, wherein the timing deviation handling unit further comprises a measurement value comparing element (62) configured to compare measurement values (MV1, MV2, MVn) from at least two different measurement providing devices (12, 14, 16) in relation to an applicability criterion (AC) and enable aborting of wide area control if the applicability criterion is not fulfilled.

**18.** A computer program for evaluating the accuracy of timing provided by time generating equipment (12, 14, 16, 20, 22, 24, 26, 28, 32) in relation to wide area control in a power transmission system, said wide area control being performed in said power transmission system based on time stamped measurements (P1, P2, Pn) of system data, the time stamped measurements comprising time stamps (TS), the computer program being loadable into an internal memory of a power control device and comprises computer program code means to make the power control device, when said program is loaded in said internal memory,
investigate the timing used in relation to the measurements,
determine if one or more of the time stamps are reliable or not, and thereby
determine if the timing is reliable or not based on the investigation,
and
abort wide area control if the timing is deemed unreliable.

**Patentansprüche**

**1.** Verfahren zum Bewerten der Genauigkeit der durch Zeiterzeugungsausrüstung (12, 14, 16, 20, 22, 24, 26, 28, 32) in Bezug auf die großräumige Steuerung in einem Energieübertragungssystem bereitgestellten Zeiteinstellung, wobei die großräumige Steuerung in dem Energieübertragungssystem auf der Grundlage von zeitgestempelten Messungen (P1, P2, Pn) von Systemdaten durchgeführt wird, wobei die zeitgestempelten Messungen Zeitstempel (TS) aufweisen, wobei das Verfahren die folgenden Schritte aufweist:

Untersuchen (68, 70, 74, 78) der in Bezug auf die Messungen verwendeten Zeiteinstellung, Bestimmen (72, 76, 80), ob die Zeiteinstellung zuverlässig ist oder nicht, auf der Grundlage der Untersuchung, Abbrechen (88) der großräumigen Steuerung, wenn die Zeiteinstellung als unzuverlässig erachtet wird, und wobei der Schritt des Bestimmens, ob die Zeiteinstellung zuverlässig ist oder nicht, das Bestimmen aufweist, ob einer oder mehrerer der Zeitstempel (TS) zuverlässig ist/sind oder nicht.

**2.** Verfahren nach Anspruch 1, wobei das Untersuchen der Zeitstempel das Bestimmen (68) von mindestens einer Zeitverzögerung (TD) zwischen den Zeitstempeln (TS) von Messungen, die zur Verwendung bei der großräumigen Steuerung bestimmt sind, und dem Zeitpunkt (GCT), an dem diese Messungen durch eine Messungserfassungsvorrichtung des Systems empfangen werden, Vergleichen (68) der Zeitverzögerung mit einem Zeitverzögerungsbereich (TDR), der eine obere und eine untere Grenze aufweist, und Durchführen des Schritts des Abbrechens der großräumigen Steuerung aufweist, wenn (72) die bestimmte Zeitverzögerung außerhalb dieses Bereichs liegt.

**3.** Verfahren nach Anspruch 2, wobei das System eine Messungsabgleichseinheit (28; 18) aufweist, die die Messungen gemäß ihren Zeitstempeln abgleicht.

**4.** Verfahren nach Anspruch 3, wobei der Schritt des Bestimmens mindestens einer Zeitverzögerung das Bestimmen einer Zeitverzögerung für Messungen (P1, P2, Pn) nach der Lieferung durch die Messungsabgleichseinheit aufweist, wobei diese Zeitverzögerung mit der oberen Grenze des Bereichs verglichen wird.

**5.** Verfahren nach Anspruch 3 oder 4, wobei die Messungsabgleichseinheit eine Messungserfassungsvorrichtung ist und der Schritt des Bestimmens mindestens einer Zeitverzögerung das Bestimmen einer Zeitverzögerung für durch die Messungsabgleichseinheit empfangene Messungen (P1, P2, Pn) aufweist, wobei die Zeitverzögerung mit der unteren Grenze des Bereichs verglichen wird.

**6.** Verfahren nach einem der vorhergehenden Ansprüche, wobei die zeitgestempelten Messungen von Messwert-Bereitstellungsvorrichtungen (12, 14, 16) erhalten werden, die mit mindestens einer Bezugstaktvorrichtung (20, 22, 24, 26) in Kontakt sind.

**7.** Verfahren nach Anspruch 6, wobei die Zeitstempel (TS) der Messungen von einer Einstellung (RF) begleitet werden, die einen verlorenen Kontakt mit Bezugstaktvorrichtungen anzeigt, wobei der Schritt des Untersuchens das Untersuchen (74) beinhaltet, ob eine solche Einstellung in den Messungen vorhanden ist, und der Schritt des Abbrechens das Abbrechen der großräumigen Steuerung beinhaltet, wenn diese Einstellung in mindestens einer Messung vorhanden ist.

**8.** Verfahren nach Anspruch 6 oder 7, wobei der Schritt des Untersuchens der Zeiteinstellung das Vergleichen (78) der über die Bezugstaktvorrichtung (20, 22, 24, 26) mit der Zeit (LCT) eines lokalen Takts (42) bereitgestellten Zeit (GCT) und das Abbrechen der großräumigen Steuerung beinhaltet, wenn (80) die Differenz einen Zuverlässigkeitsschwellenwert (RTH) überschreitet.

**9.** Verfahren nach einem der Ansprüche 6 bis 8, das ferner den Schritt des Untersuchens (82) von Messwerten (MV1, MV2, MVn) von Messungen von mindestens zwei verschiedenen Messungsbereitstellungsvorrichtungen in Bezug auf ein Anwendbarkeitskriterium (AC) und das Abbrechen der großräumigen Steuerung aufweist, wenn (84) das Anwendbarkeitskriterium nicht erfüllt wird.

**10.** Energiesteuerungsvorrichtung (10) zum Bewerten der Genauigkeit der durch Zeiterzeugungsausrüstung (12, 14, 16, 20, 22, 24, 26, 28, 32) in Bezug auf die großräumige Steuerung in einem Energieübertragungssystem bereitgestellten Zeiteinstellung, wobei die großräumige Steuerung in dem Energieübertragungssystem auf der Grundlage von zeitgestempelten Messungen (P1, P2, Pn) von Systemdaten durchgeführt wird, wobei die zeitgestempelten Messungen Zeitstempel (TS) aufweisen, wobei die Vorrichtung ferner Folgendes aufweist:

eine Zeiteinstellungsabweichungsverarbeitungseinheit (30), die für Folgendes konfiguriert ist:

Untersuchen der in Bezug auf die Messungen verwendeten Zeiteinstellung,
Bestimmen, ob einer oder mehrere der Zeitstempel zuverlässig sind oder nicht, und dadurch
Bestimmen, ob die Zeiteinstellung zuverlässig ist oder nicht, auf der Grundlage der Untersuchung, und
Abbrechen der großräumigen Steuerung, wenn die Zeiteinstellung als unzuverlässig erachtet wird.

**11.** Vorrichtung nach Anspruch 10, wobei die Zeiteinstellungsabweichungsverarbeitungseinheit ein Zeitverzögerungsbestimmungselement (52), das konfiguriert ist, mindestens eine Zeitverzögerung (TD) zwischen den Zeitstempeln (TS) von Messungen, die zur Verwendung bei der großräumigen Steuerung bestimmt sind, und dem Zeitpunkt (GCT) zu bestimmen, an dem diese Messungen durch eine Messungserfassungsvorrichtung des Systems empfangen werden, und ein Vergleichselement (54) aufweist, das konfiguriert ist, die Zeitverzögerung mit einem Zeitverzögerungsbereich (TDR), der eine obere und eine untere Grenze aufweist, zu vergleichen und das Abbrechen der großräumigen Steuerung zu ermöglichen, wenn die bestimmte Zeitverzögerung sich außerhalb dieses Bereichs befindet.

**12.** Vorrichtung nach Anspruch 11, wobei das System eine Messungsabgleichseinheit (28; 18) aufweist, die die Messungen gemäß ihren Zeitstempeln abgleicht.

**13.** Vorrichtung nach Anspruch 12, wobei das Zeitverzögerungsbestimmungselement, wenn es zum Bestimmen mindestens einer Zeitverzögerung konfiguriert ist, konfiguriert ist, eine Zeitverzögerung für Messungen (P1, P2, Pn) nach der Lieferung durch die Messungsabgleichseinheit zu bestimmen, wobei die Zeitverzögerung mit der oberen Grenze des Bereichs verglichen wird.

**14.** Vorrichtung nach Anspruch 12 oder 13, wobei die Messungsabgleichseinheit eine Messungserfassungsvorrichtung ist und das Zeitverzögerungsbestimmungselement, wenn es konfiguriert ist, mindestens eine Zeitverzögerung zu bestimmen, konfiguriert ist, eine Zeitverzögerung für durch die Messungsabgleichseinheit empfangene Messungen (P1, P2, Pn) zu bestimmen, wobei die Zeitverzögerung mit der unteren Grenze des Bereichs verglichen wird.

15. Vorrichtung nach einem der Ansprüche 10 bis 14, wobei die Zeiteinstellungsabweichungsverarbeitungseinheit ein Kombinierungselement (60) aufweist, das konfiguriert ist, eine Einstellung (RF) zu erhalten, die einen verlorenen Kontakt mit Bezugstaktvorrichtungen angibt und das Abbrechen der großräumigen Steuerung zu ermöglichen, wenn diese Einstellung in mindestens einer Messung vorhanden ist.

16. Vorrichtung nach einem der Ansprüche 10 bis 15, wobei die Zeiteinstellungsabweichungsverarbeitungseinheit ein Zeiteinstellungsvergleichselement (46) aufweist, das konfiguriert ist, die über die Bezugstaktvorrichtung bereitgestellte Zeiteinstellung (GCT) mit der Zeiteinstellung (LCT) eines lokalen Takts (42) zu vergleichen und das Abbrechen der großräumigen Steuerung zu ermöglichen, wenn die Differenz einen Zuverlässigkeitsschwellenwert (RTH) überschreitet.

17. Vorrichtung nach einem der Ansprüche 10 bis 16, wobei die Zeiteinstellungsabweichungsverarbeitungseinheit ferner ein Messwert-Vergleichselement (62) aufweist, das konfiguriert ist, Messwerte (MV1, MV2, MVn) von mindestens zwei verschiedenen Messungsbereitstellungsvorrichtungen (12, 14, 16) in Bezug auf ein Anwendbarkeitskriterium (AC) zu vergleichen und das Abbrechen der großräumigen Steuerung zu ermöglichen, wenn das Anwendbarkeitskriterium nicht erfüllt ist.

18. Computerprogramm zum Bewerten der Genauigkeit der durch Zeiterzeugungsausrüstung (12, 14, 16, 20, 22, 24, 26, 28, 32) in Bezug auf die großräumige Steuerung in einem Energieübertragungssystem bereitgestellten Zeiteinstellung, wobei die großräumige Steuerung in dem Energieübertragungssystem auf der Grundlage von zeitgestempelten Messungen (P1, P2, Pn) von Systemdaten durchgeführt wird, wobei die zeitgestempelten Messungen Zeitstempel (TS) aufweisen, wobei das Computerprogramm in einen internen Speicher einer Energiesteuerungsvorrichtung geladen werden kann und Computerprogrammcodemittel aufweist, um zu bewirken, dass die Energiesteuerungsvorrichtung, wenn das Programm in den internen Speicher geladen ist, Folgendes durchführt:

Untersuchen der in Bezug auf die Messungen verwendeten Zeiteinstellung,
Bestimmen, ob einer oder mehrere Zeitstempel zuverlässig sind oder nicht, und dadurch:

Bestimmen, ob die Zeiteinstellung zuverlässig ist oder nicht, auf der Grundlage der Untersuchung,
und
Abbrechen der großräumigen Steuerung, wenn die Zeiteinstellung als unzuverlässig erachtet wird.

## Revendications

1. Procédé pour évaluer la précision d'une synchronisation fournie par un équipement de génération d'heure (12, 14, 16, 20, 22, 24, 26, 28, 32) concernant une commande de zone large dans un système de transmission électrique, laquelle commande de zone large est effectuée dans ledit système de transmission électrique en fonction de mesures horodatées (P1, P2, Pn) de données système, les mesures horodatées comprenant des horodatages (TS), lequel procédé comprend les étapes consistant à :

- rechercher (68, 70, 74, 78) la synchronisation utilisée concernant les mesures ;
- déterminer (72, 76, 80) si la synchronisation est fiable ou non en fonction de la recherche ;
- abandonner (88) la commande de zone large si l'on considère que la synchronisation n'est pas fiable ; dans lequel l'étape consistant à déterminer si la synchronisation est fiable ou non consiste à déterminer si un ou plusieurs des horodatages (TS) sont fiables ou non.

2. Procédé selon la revendication 1, dans lequel la recherche des horodatages consiste à déterminer (68) au moins un retard temporel (TD) entre les horodatages (TS) des mesures à utiliser dans la commande de zone large et l'heure (GCT) à laquelle ces mesures sont reçues par un dispositif de recueil de mesures du système, à comparer (68) le retard temporel à une plage de retards temporels (TDR) ayant une limite supérieure et une limite inférieure, et à effectuer l'étape d'abandon de la commande de zone large si (72) le retard temporel déterminé se situe hors de cette plage.

3. Procédé selon la revendication 2, dans lequel le système comprend une unité d'alignement de mesures (28 ; 18) qui aligne les mesures en fonction de leurs horodatages.

4. Procédé selon la revendication 3, dans lequel l'étape consistant à déterminer au moins un retard temporel consiste à déterminer un retard temporel pour les mesures (P1, P2, Pn) après leur transmission par ladite unité d'alignement de mesures, lequel retard temporel est comparé à la limite supérieure de la plage.

5. Procédé selon les revendications 3 ou 4, dans lequel l'unité d'alignement de mesures consiste en un dispositif de recueil de mesures, tandis que l'étape consistant à déterminer au moins un retard temporel consiste à déterminer un retard temporel pour les mesures (P1, P2, Pn) reçues par l'unité d'alignement de mesures, lequel retard temporel est comparé à la limite inférieure de la plage.

6. Procédé selon l'une quelconque des revendications précédentes, dans lequel les mesures horodatées sont obtenues à partir de dispositifs de fourniture de valeurs de mesure (12, 14, 16) qui sont en contact avec au moins un dispositif d'horloge de référence (20, 22, 24, 26).

7. Procédé selon la revendication 6, dans lequel les horodatages (TS) des mesures sont accompagnés d'un réglage (RF) indiquant un contact perdu avec les dispositifs d'horloge de référence, l'étape de recherche consistant à rechercher (74) si un tel réglage existe dans les mesures, et l'étape d'abandon consistant à abandonner la commande de zone large si ce réglage existe dans au moins une mesure.

8. Procédé selon les revendications 6 ou 7, dans lequel l'étape de recherche de la synchronisation consiste à comparer (78) l'heure (GCT) fournie via le dispositif d'horloge de référence (20, 22, 24, 26) à l'heure (LCT) d'une horloge locale (42), et à abandonner la commande de zone large dans le cas (80) où la différence dépasse un seuil de fiabilité (RTH).

9. Procédé selon l'une quelconque des revendications 6 à 8, comprenant en outre l'étape consistant à rechercher (82) des valeurs de mesure (MV1, MV2, MVn) de mesures provenant d'au moins deux dispositifs de fourniture de mesures différents par rapport à un critère d'applicabilité (AC), et à abandonner la commande de zone large si (84) le critère d'applicabilité n'est pas rempli.

10. Dispositif de commande électrique (10) pour évaluer la précision d'une synchronisation fournie par un équipement de génération d'heure (12, 14, 16, 20, 22, 24, 26, 28, 32) concernant une commande de zone large dans un système de transmission électrique, laquelle commande de zone large est effectuée dans ledit système de transmission électrique en fonction de mesures horodatées (P1, P2, Pn) de données système, les mesures horodatées comprenant des horodatages (TS), lequel dispositif comprend en outre :

une unité de gestion d'écart de synchronisation (30) conçue pour :

- rechercher la synchronisation utilisée concernant les mesures ;
- déterminer si un ou plusieurs des horodatages sont fiables ou non ;
- déterminer ainsi si la synchronisation est fiable ou non en fonction de la recherche ; et
- abandonner la commande de zone large si l'on considère que la synchronisation n'est pas fiable.

11. Dispositif selon la revendication 10, dans lequel l'unité de gestion d'écart de synchronisation comprend un élément de détermination de retard temporel (52) conçu pour déterminer au moins un écart temporel (TD) entre les horodatages (TS) des mesures à utiliser dans la commande de zone large et l'heure (GCT) à laquelle ces mesures sont reçues par un dispositif de recueil de mesures du système, et un élément de comparaison (54) conçu pour comparer le retard temporel à une plage de retards temporels (TDR) ayant une limite supérieure et une limite inférieure, et activer l'abandon de la commande de zone large si le retard temporel déterminé se situe hors de cette plage.

12. Dispositif selon la revendication 11, dans lequel le système comprend une unité d'alignement de mesures (28 ; 18) qui aligne les mesures en fonction de leurs horodatages.

13. Dispositif selon la revendication 12, dans lequel l'élément de détermination de retard temporel, lorsqu'il est conçu pour déterminer au moins un retard temporel, est conçu pour déterminer un retard temporel pour les mesures (P1, P2, Pn) après leur transmission par ladite unité d'alignement de mesures, lequel retard temporel est comparé à la limite supérieure de la plage.

14. Dispositif selon les revendications 12 ou 13, dans lequel l'unité d'alignement de mesures consiste en un dispositif de recueil de mesures, tandis que l'élément de détermination de retard temporel, lorsqu'il est conçu pour déterminer au moins un retard temporel, est conçu pour déterminer un retard temporel pour les mesures (P1, P2, Pn) reçues par l'unité d'alignement de mesures, lequel retard temporel est comparé à la limite inférieure de la plage.

15. Dispositif selon l'une quelconque des revendications 10 à 14, dans lequel l'unité de gestion d'écart de synchronisation comprend un élément combinant (60) conçu pour obtenir un réglage (RF) indiquant un contact perdu avec les dispositifs d'horloge de référence, et activer l'abandon de la commande de zone large si ce réglage existe dans au moins une mesure.

**16.** Dispositif selon l'une quelconque des revendications 10 à 15, dans lequel l'unité de gestion d'écart de synchronisation comprend un élément de comparaison de synchronisation (46) conçu pour comparer la synchronisation (GCT) fournie via le dispositif d'horloge de référence à la synchronisation (LCT) d'une horloge locale (42), et activer l'abandon de la commande de zone large dans le cas où la différence dépasse un seuil de fiabilité (RTH).

**17.** Dispositif selon l'une quelconque des revendications 10 à 16, dans lequel l'unité de gestion d'écart de synchronisation comprend en outre un élément de comparaison de valeurs de mesure (62) conçu pour comparer des valeurs de mesure (MV1, MV2, MVn) provenant d'au moins deux dispositifs de fourniture de mesures différents (12, 14, 16) par rapport à un critère d'applicabilité (AC), et activer l'abandon de la commande de zone large si le critère d'applicabilité n'est pas rempli.

**18.** Programme informatique permettant d'évaluer la précision d'une synchronisation fournie par un équipement de génération d'heure (12, 14, 16, 20, 22, 24, 26, 28, 32) concernant une commande de zone large dans un système de transmission électrique, laquelle commande de zone large est effectuée dans ledit système de transmission électrique en fonction de mesures horodatées (P1, P2, Pn) de données système, les mesures horodatées comprenant des horodatages (TS), lequel programme informatique peut être chargé dans une mémoire interne d'un dispositif de commande électrique et comprend un moyen de type code de programme informatique afin que, lorsque ledit programme est chargé dans ladite mémoire interne, le dispositif de commande puisse :

- rechercher la synchronisation utilisée concernant les mesures ;
- déterminer si un ou plusieurs des horodatages sont fiables ou non,
- déterminer ainsi si la synchronisation est fiable ou non en fonction de la recherche ; et
- abandonner la commande de zone large si l'on considère que la synchronisation n'est pas fiable.

FIG. 1

EP 2 312 719 B1

FIG. 3

EP 2 312 719 B1

FIG. 4

P →

| MV | TS | RF |
|----|----|----|

## FIG. 2

28

| $t_{n+5}$ $t_{n+4}$ $t_{n+3}$ $t_{n+2}$ $t_{n+1}$ $t_n$ | ST 1 |
| | ST 2 |
| | ST n |

12 →

14 →

16 →

## FIG. 5A

28

| $t_{n+5}$ $t_{n+4}$ $t_{n+3}$ $t_{n+2}$ $t_{n+1}$ $t_n$ | ST 1 |
| | ST 2 |
| | ST n |

12 →

14 →

16 →

## FIG. 5B

FIG. 6A

FIG. 6B

FIG. 7A

FIG. 7B

FIG. 7C

FIG. 7D

FIG. 8B

FIG. 8D

FIG. 8A

FIG. 8C

FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

• US 2009099798 A, Gong

### Non-patent literature cited in the description

• **R. SADIKOVIC et al.** Application of FACTS Devices for Damping of Power System Oscillations. *proceedings of the Power Tech conference 2005,* 27 June 2005